Europäisches Patentamt

European Patent Office

Office européen des brevets

(11) Veröffentlichungsnummer: **0 236 893**
**A2**

(12) **EUROPÄISCHE PATENTANMELDUNG**

(21) Anmeldenummer: 87102908.8

(51) Int. Cl.⁴: **B01D 19/04**

(22) Anmeldetag: 02.03.87

(30) Priorität: 08.03.86 DE 3607674

(43) Veröffentlichungstag der Anmeldung:
16.09.87 Patentblatt 87/38

(84) Benannte Vertragsstaaten:
AT BE CH DE ES FR GB IT LI LU NL SE

(71) Anmelder: Henkel Kommanditgesellschaft auf Aktien
Postfach 1100 Henkelstrasse 67
D-4000 Düsseldorf-Holthausen(DE)

(72) Erfinder: Schulz, Paul, Dr.
Auf dem Scheidt 35
D-5600 Wuppertal 11(DE)
Erfinder: Witthaus, Martin, Dr.
Burgmüllerstrasse 1
D-4000 Düsseldorf 1(DE)
Erfinder: Waldmann, Jürgen
Robert-Koch-Strasse 26
D-4019 Monheim(DE)

(54) Verfahren zur Herstellung eines Entschäumergemisches.

(57) Zwecks Herstellung eines hochwirksamen, aus Paraffinkohlenwasserstoffen, hydrophobierter Kieselsäure und flüssigen Paraffinkohlenwasserstoffen bestehenden Entschäumergemisches wird die feinteilige Kieselsäure in oberhalb 40 °C - schmelzenden Paraffinkohlenwasserstoffen dispergiert und mit Alkyltrichlorsilanen umgesetzt, deren Alkylgruppen 4 bis 22 C-Atome aufweisen.

EP 0 236 893 A2

## "Verfahren zur Herstellung eines Entschäumergemisches"

Die vorliegende Erfindung betrifft ein Verfahren zur Herstellung eines aus hydrophobierter Kieselsäure und Paraffinkohlenwasserstoffen bestehenden Entschäumergemisches durch Umsetzen von hydrophiler, in den Paraffinkohlenwasserstoffen dispergierter Kieselsäure mit Alkylchlorsilanen.

Entschäumergemische aus Paraffinkohlenwasserstoffen und hydrophobierter, d. h. silanierter Kieselsäure sind bekannt und finden breite Anwendung. Ein aus EP 8 829 bekanntes Anwendungsgebiet ist der Einsatz in schäumenden Detergentien bzw. Waschmitteln. Es hat sich jedoch gezeigt, daß Gemische aus Paraffinkohlenwasserstoffen und zuvor hergestellter hydrophobierter Kieselsäure vielfach nur eine beschränkte Lagerstabilität aufweisen, die auch durch Konfektionierung nicht im erforderlichen Umfang verbessert werden kann.

In US 3.388.073 wurde vorgeschlagen, diese Gemische "in situ" herzustellen, wozu man die als Ausgangsmaterial dienende hydrophile Kieselsäure in einem flüssigen Paraffinkohlenwasserstoff dispergiert, mit Dialkyldichlorsilanen umsetzt und die erhaltenen Gemische nach Entfernen des Chlorwasserstoffes unmittelbar weiterverwendet. Die in den Dialkyldichlorsilanen enthaltenen Alkylgruppen sollen nicht mehr als 4 C-Atome aufweisen und bestehen vorzugsweise aus Methylgruppen. Die hydrophilierte Kieselsäure weist cylische Siloxanreste auf. Es hat sich gezeigt, daß die - schauminhibierenden Eigenschaften der erhaltenen Gemische für bestimmte Anwendungsgebiete, insbesondere starkschäumende Tenside und Waschmittel, nicht ausreichen.

In der DE-A 24 54 977 (US 4.082.691) wird vorgeschlagen, die Umsetzung der in den Paraffinkohlenwasserstoffen dispergierten Kieselsäure in 2 Stufen vorzunehmen, wobei in der 1. Stufe Alkyltrichlorsilane und in der 2. Stufe Dialkyldichlorsilane eingesetzt werden. Die in diesen Chlorsilanen enthaltenen Alkylgruppen können 1 bis 18 C-Atome enthalten bzw. cycloaliphatischer Natur sein, wobei jedoch die Dichlorsilane bevorzugt Methylgruppen und die Trichlorsilane bevorzugt langkettige Alkylgruppen aufweisen. Die Patentschrift lehrt, daß nur eine zweistufige Umsetzung unter Einhaltung eines Molverhältnisses von Dichlorsilan zu Trichlorsilan von 1 : 1 bis 1 : 5 zu brauchbaren Entschäumern führt. Ein Unterschreiten oder Überschreiten dieses Verhältnisses führt zu ungeeigneten Entschäumern. Außerdem soll die Temperatur des Reaktionsgemisches bei der Zugabe der Chlorsilane unterhalb 50 °C, vorzugsweise unterhalb 40 °C liegen. Die Verwendung von Paraffinkohlenwasserstoffen, insbesondere von Mikrowachsen, die oberhalb dieser Temperatur schmelzen, ist daher ausgeschlossen.

Es bestand die Aufgabe, ein "in situ"-Verfahren zur Herstellung von Gemischen aus Paraffinkohlenwasserstoffen und silanierter Kieselsäure zu entwickeln, das die Mitverwendung höherschmelzender, durch eine besonders hohe Entschäumerwirkung gekennzeichneter Paraffine gestattet und in einer einstufigen und somit vereinfachten Arbeitsweise zu Produkten mit überlegener Entschäumerwirkung führt. -

Gegenstand der Erfindung ist ein Verfahren zur Herstellung von Entschäumergemischen aus Paraffinkohlenwasserstoffen und hydrophobierter Kieselsäure durch Umsetzen einer in flüssigen Paraffinkohlenwasserstoffen dispergierten hydrophilen Kieselsäure mit Alkylchlorsilanen unter Entfernung des gebildeten Chlorwasserstoffes, dadurch gekennzeichnet, daß man die Kieselsäure, die in oberhalb 40 °C schmelzenden Paraffinkohlenwasserstoffen dispergiert ist, mit Alkyltrichlorsilanen umsetzt, deren Alkylgruppen 4 bis 22 C-Atome aufweisen.

Als Ausgangsmaterial sind hydrophile Kieselsäuren geeignet, wie sie in bekannter Weise durch Fällung aus wäßrigen Lösungen von Alkalimetallsilikaten oder aus Kieselsäuresolen erhältlich sind (sog. Fällungskieselsäure). Brauchbar sind auch durch Hydrolyse von Siliciumtetrachlorid in der Dampfphase erhaltene Produkte. Fällungskieselsäuren werden bevorzugt eingesetzt. Derartige Kieselsäuren weisen üblicherweise eine Teilchengröße von ungefähr 5 bis 100 nm - (Nanometer), vorzugsweise von 10 bis 50 nm und eine spezifische Oberfläche von 50 bis 400 $m^2/g$ - (Quadratmeter pro Gramm), vorzugsweise von 100 bis 350 $m^2/g$ auf.

Die Kieselsäure wird in einer Paraffinmatrix dispergiert. Der Anteil der Kieselsäure, bezogen auf Gemisch, kann 0,5 bis 22 Gew.-%, vorzugsweise 1 bis 18 Gew.-% betragen. Als Paraffinmatrix eignen sich Paraffine und Paraffingemische, die bei Temperaturen oberhalb 40 °C, insbesondere oberhalb 50 °C schmelzen. Zu diesen höherschmelzenden Produkten zählen Hartparaffin, mikrokristalline Wachse sowie deren Gemische. Wegen ihrer besonders hohen Wirksamkeit als Schaumdämpfungsmittel werden Mikrokristallinwachse und ihre Gemische mit anderen Paraffinkohlenwasserstoffen bevorzugt eingesetzt. Als Mischungsbestandteile haben sich z. B. Weichparaffine bzw. Vaseline und ggf. auch Paraffinöle als brauchbar erwiesen, zumal sich gezeigt hat, daß in derartigen Gemischen die vergleichsweise aufwendigeren Mikroparaffine zu einem erheblichen Anteil durch derartige niedrigerschmelzenden Paraffine ersetzt werden kann, ohne daß die beabsichtigte Wirkung nennenswert nachläßt. Bevorzugt werden daher auch solche Gemische eingesetzt, die zu 90 bis 25 %, insbesondere zu 75 bis 35 % aus Mikroparaffinen und zu 10 bis 75 %, insbesondere zu 25 bis 65 % aus Hart-oder Weichparaffinen, Vaseline oder Petrolatum sowie deren Mischungen bestehen.

Geeignete Mikroparaffine schmelzen üblicherweise im Bereich von 55 °C bis 95 °C, Hartparaffine im Bereich von 38 °C bis 60 °C. Vaseline und Petrolatum sind bei Raumtemperatur flüssig bis halbfest. Niedermolekulare Paraffine mit einem Erstarrungsbereich von unter 10 °C tragen nur wenig zur Entschäumerwirkung bei, können aber eingesetzt werden, um die Rheologie bzw. das Schmelzverhalten der Mischungen einzustellen.

Sofern die Herstellung ausgesprochen preiswerter Entschäumer angestrebt wird, kann auch auf die Mitverwendung von Mikrokristallinwachsen verzichtet werden. Der mögliche geringfügige Verlust an Entschäumerwirkung kann bei vielen Anwendungsgebieten durchaus toleriert bzw. durch eine etwas höhere Dosierung kompensiert werden.

Die hydrophile Kieselsäure wird in der flüssigen, d. h. auf Temperaturen oberhalb des Schmelzpunktes erhitzten Paraffinmatrix dispergiert, wobei man sich vorzugsweise wirksamer Rührwerke bedient. Die Temperatur soll mehr als 40 °C, vorzugsweise mehr als 50 °C betragen und insbesondere im Bereich von 60 °C bis 140 °C liegen. Vor oder während der Zugabe wird zweckmäßigerweise Inertgas, z. B. Stickstoff, in das flüssige Paraffin eingeleitet und vorhandener Sauerstoff verdrängt. Das Einleiten von Stickstoff wird zweckmäßigerweise auch während der nachfolgenden Umsetzung fortgesetzt bzw. von Zeit zu Zeit durchgeführt, um das Austreiben des Halogenwasserstoffs zu fördern.

Als Alkyltrichlorsilane werden solche mit 4 bis 22 C-Atomen, vorzugsweise 6 bis 18 C-Atomen eingesetzt. Produkte mit linearen Alkylketten zeichnen sich in der Regel gegenüber solchen mit verzweigter oder cyclischer Kette durch eine überlegene Wirkung aus und werden daher bevorzugt. Beispiele für bevorzugte Alkylgruppen sind Hexyl-, Heptyl-, Octyl-, Nonyl-, Decyl-, Undecyl-, Dodecyl-, Tridecyl-, Tetradecyl-, Hexadecyl-und Octadecyl-Reste sowie deren Gemische. In Sonderfällen, d. h. für spezielle starkschäumende Tensidkombinationen können bestimmte verzweigte, gegebenenfalls auch cyclische Alkylreste oder Kombinationen von verzweigten und cyclischen Alkylresten von Vorteil sein.

Das Verhältnis von Kieselsäure und Alkyltrichlorsilan ist abhängig von der Zahl der aktiven, d. h. substituierbaren Hydroxylgruppen der Kieselsäure. Anzustreben ist eine möglichst aktive Fällungskieselsäure, die vor dem Einsatz nicht zu hoch erhitzt, insbesondere nicht calciniert werden darf. Im allgemeinen kommen formell auf 1 Mol Kieselsäure 0,01 bis 0,3 Mol, vorzugsweise 0,05 bis 0,15 Mol Alkyltrichlorsilan zum Einsatz. Ein in diesem Zusammenhang kennzeichnendes Merkmal der eingesetzten Kieselsäure ist ihr Wassergehalt, der nach einer speziellen Methode bestimmt wird. Hierzu werden ca. 2 g der Kieselsäure auf einer Mikroprozessorwaage mit aufgesetzter Trockenvorrichtung (Sartorius MP8 mit Trockenpistole) eingewogen, dann innerhalb 10 Minuten auf 245 °C erhitzt und der Gewichtsverlust bestimmt. Der auf diesen Wassergehalt bezogene Trichlorsilaneinsatz liegt dann bei 0,04 bis 1,2 Mol, vorzugsweise 0,2 bis 0,6 Trichlorsilan/Mol Wasser.·

Die Zugabe des Alkyltrichlorsilans kann unmittelbar in die erhitzte, beispielsweise eine Temperatur von 70 °C bis 140 °C aufweisende Paraffin-Kieselsäure-Mischung erfolgen. Die Zugabe des Alkyltrichlorsilans wird, sofern der Anteil der Kieselsäure in der Paraffinmatrix 2 bis 3 % wesentlich überschreitet und dementsprechende Mengen an Silan zugefügt werden muß, zweckmäßigerweise auf einen Zeitraum von 10 bis 30 Minuten verteilt, wobei es vorteilhaft ist, den Hydrophobierungsprozeß bei höherer Tempera tur zu beginnen (z. B. 100 bis 140 °C) und die Temperatur nach Zufügen von etwa 10 bis 40 %, vorzugsweise 20 bis 30 %, der insgesamt einzusetzenden Menge schrittweise auf 100 °C bis 70 °C, bevorzugt 90 °C bis 80 °C abzusenken. Zur Vervollständigung der Umsetzung wird diese Temperatur noch für 1,5 bis 4 Stunden aufrechterhalten.

Nach einer gleichermaßen bevorzugten Verfahrensversion wird die bei höheren Kieselsäurezusätzen beobachtete hohe Anfangsviskosität der Mischung umgangen, indem die Fällungskieselsäure in zwei oder mehreren Teilmengen sukzessiv in die Paraffinschmelze eingetragen und jede Teilmenge vor Zugabe der darauffolgenden mit etwa 10 bis 40 % der gesamt einzusetzenden Alkyltrichlorsilanmenge umgesetzt wird. Eine Anhebung der Reaktions-Anfangstemperatur ist in dieser Verfahrensversion nicht erforderlich, Haupt-und Nachreaktion finden bei gleicher Temperatur in der Regel zwischen 70 bis 100 °C statt.

Abschließend wird das Gemisch noch für einige Zeit, beispielsweise 0,5 bis 1,5 Stunden auf Temperaturen von 110 °C bis 220 °C, vorzugsweise 120 °C bis 150 °C erhitzt und die Reste an Chlorwasserstoff mittels Durchleiten von Stickstoff und/oder Anwenden von Unterdruck entfernt. Während der gesamten Umsetzung und der Nachbehandlung wird das Reaktionsgut durch geeignete Rührvorrichtungen intensiv durchmischt. Das nach beendeter Umsetzung erhaltene und auf Raumtemperatur abgekühlte Umsetzungsprodukt ist praktisch frei von Chlorwasserstoff und bildet auch ohne weiteren Zusatz eine lagerstabile Dispersion.

Vollkommen HCl-freie, neutrale Aufmischungen resultieren durch eine Nachbehandlung der Produktschmelze mit basischen, paraffinlöslichen Stoffen, vorzugsweise längerkettigen Alkylaminen, z. B. Kokosamin. Zusätze von 0,2 bis 5 %, vorzugsweise 0,5 bis 2 % Kokosamin bewirken, daß auch unter relativ milden Bedingungen (z. B. 120 °C/70 mbar) entgaste Produkte anschließend keinen freien Chlorwasserstoff mehr enthalten. Der Zusatz an Alkylaminen hat keinen negativen Einfluß auf die Entschäumerleistung. Damit behandelte Produkte sind, ebenso wie die Ausgangsmischung, bei 100 °C und Luftzutritt über wenigstens 2 Wochen chemisch stabil, d. h. auch in geschmolzener Form lagerfähig.

Die erhaltenen Dispersionen können unmittelbar als Schauminhibitoren eingesetzt werden. Sie können für bestimmte Anwendungsgebiete auch mit Zusätzen versehen bzw. Verschnittmitteln oder inerten Lösungsmitteln verdünnt werden. Entschäumer, die für einen Einsatz in pulverförmigen bzw. granularen Produkten, z. B. in Wasch-und Reinigungsmitteln bestimmt sind, können auch auf ein festes, inertes Trägermaterial bzw. Adsorbens aufgebracht bzw. darin inkorporiert werden. Geeignete Trägermaterialien sind z. B. Natriumsulfat, Natriumcarbonat, Natriumsilikat, Natriumphosphat bzw. -polyphosphat, Magnesiumoxid, Magnesiumcarbonat, Magnesiumsilikat, Calciumcarbonat, Aluminiumoxid, Zeolith oder auch Gemische derartiger Trägermaterialien. Diese liegen vorzugsweise in einer lockeren, saugfähigen Form vor, wie sie beispielsweise beim Versprühen und Trocknen einer wäßrigen Lösung bzw. Aufschlämmung entsteht. Auch organische Bindemittel wie Cellulose, Stärke, Cellulose-und Stärkeether, Polyglykole oder andere in Wasser lösliche bzw. dispergierbare Polymere oder Fettalkohol-bzw. Oxoalkoholethoxylate sind als Trägermaterial geeignet bzw. können mit den vorgenannten anorganischen Trägermaterialien kombiniert werden. Wegen der hohen Lager-und Wirkungsbeständigkeit der erfindungsgemäßen Verfahrensprodukte ist auch z. B. ein zusätzliches Umhüllen bzw. Einkapseln der Entschäumerpartikel nicht erforderlich.

Gegenstand der Erfindung sind somit auch Zubereitungen, insbesondere der vorstehend zitierten Art, welche die erfindungsgemäßen Verfahrensprodukte enthalten. Der Gehalt derartiger Zu bereitungen an den Verfahrensprodukten kann, je nach Aufnahmefähigkeit des Trägerstoffes und Anwendungsgebiet, innerhalb weiter Grenzen schwanken. Gut handhabbare bzw. dosierbare Zubereitungen enthalten im allgemeinen 1 bis 30 Gew.-%, vorzugsweise 2 bis 20 Gew.-% Verfahrensprodukt.

Anwendungsgebiete für die Entschäumer sind insbesondere die Wasch-und Reinigungsmittel sowie Textilhilfsmittel, ferner Polymerlösungen und Dispersionen, wie sie beispielsweise auf dem Klebstoffbereich und bei Anstrichmitteln anfallen sowie ganz allgemein die chemische Verfahrenstechnik, ferner die Nahrungsmittelindustrie sowie die Papierherstellung. Wegen der hohen Wirksamkeit der Verfahrensprodukte sind im allgemeinen geringe Zusatzmengen erforderlich.

## Beispiele

### Beispiel 1

647 g eines mikrokristallinen Paraffins - (Witcodur 272 ®) mit einem Schmelzbereich von 83 bis 88 °C, 500 g eines Hartparaffins mit einem Schmelzbereich von 42 bis 48 °C und 147 g Vaseline (Petrolatum) wurden aufgeschmolzen und auf 80 °C erhitzt. Nach Inertisierung mit Stickstoff wurde die Temperatur auf 120 °C erhöht und 176,5 g einer gefällten Kieselsäure unter Rühren eingetragen. Nach vollständiger Homogenisierung wurden im Verlauf von 20 Minuten 105,9 g n-Octyltrichlorsilan zugemischt, wobei die Temperatur nach Zugabe von ca. 20 % der Gesamtmenge an Alkylchlorsilan schrittweise auf 80 °C abgesenkt wurde. Anschließend wurde das Gemisch unter erneutem Einleiten von Stickstoff auf 190 °C erhitzt und danach 1 Stunde bei einem Druck von 1 mbar unter ständigem Rühren von restlichen Chlorwasserstoffspuren befreit. Der Gewichtsverlust (Chlorwasserstoff und geringfügige flüchtige Anteile) betrug 35,0 g. Nach dem Abkühlen auf Raumtemperatur erstarrte das Produkt zu einer wachsartigen Masse.

Zwecks Konfektionierung wurde das geschmolzene Produkt in einem schnell rotierenden Pflugschaufelmischer mit lockerem, gesprühtem Natriumsulfat vermischt. Hierzu wurden 167 g des Produktes auf 1,5 kg des auf 90 °C vorgewärmten Natriumsulfats innerhalb von 1 Minute aufgebracht und 3 Minuten nachgemischt. Nach Kühlung auf Raumtemperatur resultierte ein gut rieselfähiges Pulver mit einem Wirkstoffgehalt von ca. 10 % und einem Schüttgewicht von 550 g/l.

## Lagertest

Ein Gemisch von 1,5 Gew.-% der erhaltenen Entschäumerzubereitung mit 98,5 Gew.-% eines handelsüblichen granularen Waschmittels (dixan) wurde 8 Wochen im Klimaschrank bei 30 °C und 80 % relativer Luftfeuchtigkeit gelagert. Nach dieser Zeit war kein Rückgang der Entschäumerwirkung gegenüber dem Anfangswert erkennbar.

Zum Vergleich wurde ein Gemisch herangezogen, das durch Vermischen des gleichen Paraffingemisches mit einer handelsüblichen und für diesen Zweck entwickelten silanierten Kieselsäure in gleichen Mischungsverhältnissen erhalten worden war. Während der Lagerzeit wurde der Schauminhibitor weitgehend inaktiviert, so daß es bei einem Waschtest unter vergleichbaren Bedingungen zum Überschäumen und einen ca. 20%igen Verlust an Waschlauge kam.

## Beispiel 2

440 kg Mikrowachs und 440 kg Vaseline (s. Beispiel 1) wurden in geschmolzener Form aus beheizten Vorlagen in einen 2 m³ fassenden Emailkessel eindosiert und bei 80 °C homogenisiert. 120 kg Fällungskieselsäure (FK 383 der Firma DEGUSSA) wurden in zwei gleichen Teilmengen in den Kessel eingetragen. Nach Zugabe und homogener Eindispergierung der ersten Teilmenge wurden 5 kg n-Dodecyltrichlorsilan zugegeben. Nach 5 Minuten wurde die Restmenge von 60 kg Kieselsäure eindosiert und weitere 61,4 kg des Alkyltrichlorsilans über einen Zeitraum von 20 Minuten zugepumpt. Die Temperatur wurde unter Rühren weitere 60 Minuten bei 80 °C konstant gehalten. Anschließend wurde eine halbe Stunde bei 120 °C/50 mbar entgast. Nach Abkühlung des Ansatzes auf 100 °C erfolgte ein Zusatz von 20 kg (entsprechend 2 Gew.-%) Kokosamin. Das Produkt wird bei 80 bis 100 °C in geschmolzener Form bis zur weiteren Verarbeitung gelagert. Eine 10 % Aufmischung auf einem zerstäubungsgetrockneten Hohlkugelpulver (Trägerbead), das im wesentlichen aus Natriumsulfat, Zeolith, Polyacrylat und modifizierter Cellulose besteht, ergab ein Konzentrat, das sich unter verschärften Lagerbedingungen, d. h. mehrwöchige Lagerung im Klimaschrank, in Waschmitteln mit hohem Gehalt an nichtionischen Tensiden als stabil erwies.

## Ansprüche

1. Verfahren zur Herstellung von Entschäumergemischen aus Paraffinkohlenwasserstoffen und hydrophobierter Kieselsäure durch Umsetzen einer in flüssigen Paraffinkohlenwasserstoffen dispergierten hydrophilen Kieselsäure mit Alkylchlorsilanen unter Entfernung des gebildeten Chlorwasserstoffes, dadurch gekennzeichnet, daß man die Kieselsäure, die in oberhalb 40 °C - schmelzenden Paraffinkohlenwasserstoffen dispergiert ist, mit Alkyltrichlorsilanen umsetzt, deren Alkylgruppen 4 bis 22 C-Atome aufweisen.

2. Verfahren nach Anspruch 1, dadurch gekennzeichnet, daß man die Umsetzung mit Alkyltrichlorsilanen durchführt, in denen die Alkylgruppen linear sind und 6 bis 18 C-Atome aufweisen.

3. Verfahren nach den Ansprüchen 1 und 2, dadurch gekennzeichnet, daß man pro Mol Kieselsäure 0,01 bis 0,3 Mol Alkyltrichlorsilan einsetzt.

4. Verfahren nach den Ansprüchen 1 bis 3, dadurch gekennzeichnet, daß man die Umsetzung in oberhalb 50 °C schmelzenden Paraffinkohlenwasserstoffen, vorzugsweise geschmolzenen Mikroparaffinen und deren Gemischen mit Hartparaffinen und/oder Weichparaffinen und/oder Paraffinölen durchführt.

5. Verfahren nach den Ansprüchen 1 bis 4, dadurch gekennzeichnet, daß man eine Mischung von 0,5 bis 22 Gew.-%, vorzugsweise 1 bis 18 Gew.-% Kieselsäure einsetzt.

6. Verfahren nach den Ansprüchen 1 bis 5, dadurch gekennzeichnet, daß im Umsetzungsprodukt enthaltene Reste an Chlorkohlenwasserstoff durch Zugabe eines paraffinlöslichen, längerkettigen Amins neutralisiert werden.

7. Entschäumergemisch, hergestellt nach einem oder mehreren der Ansprüche 1 bis 6.

8. Entschäumerzubereitung, enthaltend ein Gemisch nach Anspruch 7.

9. Entschäumerzubereitung, dadurch gekennzeichnet, daß sie aus einem wasserlöslichen bzw. in Wasser dispergierbaren Trägerstoff bzw. Trägerstoffgemisch und daran adsorbiertem bzw. darin inkorporiertem Entschäumer gemäß Anspruch 7 besteht.

10. Verwendung eines Entschäumers bzw. einer Entschäumerzubereitung gemäß Ansprüche 7, 8 und 9 in Wasch-und Reinigungsmitteln.